# EUROPEAN PATENT APPLICATION

(11) **EP 2 145 549 A1**
(43) Date of publication of application: **20.01.2010**
(21) Application number: 08160399.5
(22) Date of filing: 15.07.2008
(51) Int. Cl.: A23L 1/328, A23L 1/0524, A23J 3/22

(54) **Method for preparation of soft granular caviar**

(71) Applicant: Khachatryan, Robert, 1976 DC Ijmuiden (NL); Khachatryan, Tigran, 1976 DC Ijmuiden (NL)
(72) Inventor: Khachatryan, Robert, 1976 DC Ijmuiden (NL); Khachatryan, Tigran, 1976 DC Ijmuiden (NL)
(74) Representative: van Heuvel, Margaretha

(57) **Abstract**

The present invention relates to a method for the preparation of a granular black caviar substitute comprising granulating a mixture comprising a protein colloid solution, a food jelly and water, and processing the obtained grains to improve color and flavour, **characterized in that** the protein colloid solution essentially consists of soya milk and the food jelly essentially is of vegetable origin. Preferably, the food jelly is pectin.

## Description

### Field of the Invention

The invention is related to a method for preparation of a delicacy granular food product, similar to black caviar.

### Background of the Invention

Methods for preparation of alimentary granular caviar are known based on the technology of thermostatic control of a solution of the components of caviar. A mixture of the components of caviar is prepared and the grains are formed by pressing the mixture through a die under pressure into hot vegetable oil. The grains are separated from the oil, washed, dried, and subsequently processed for improvement of flavor and appearance through coloring, and packed.

In particular, a Mmethod of forming grains and a device for obtaining alimentary granular caviar are known based on the technology of preparing a mixture containing hen's eggs, fish homogenate, food dye-stuff and salt, supplying gauged jets of the product into vegetable oil at a temperature of 86-90 °C, separating the grains from the oil, flushing with water, processing with a gustatory emulsion, coloring, and subsequent packing of the on-the-shelf product. Alimentary black dye-stuff obtained from an extract of tea and FeCl₃ at pH 1.8-2.2 is used as coloring. The device for implementation of the method includes a cavity for initial dissolution of the components, outlet tubes with forming heads at the ends, a source of gas pressure connected to the cavity when the components are dissolved, a cylindrical granulating cavity for formation of grains of caviar, a nipple for draining excess liquid installed axially to the cavity for initial dissolution of components in front of the outlet pipes, water jackets around the cavity and the cylindrical part of granulating cavity for thermostatic control of the cavities, and a receptacle at the bottom of the granulating cavity for accumulation of the on-the shelf products (Auth. Cert. USSR No. 1782523, A23L, 1/328, publication 23.12.92). The defect of this method is that the obtained grains are very small, stick to each other, don't keep their spherical form and require further calibration. Besides, the product has non-satisfactory dietary and food features, i.e. some people have allergy to hen's egg. On the other hand, usage of chemical substance, i.e. iron chloride, also decreases the food quality, its dietary and food features.

In another case, the carbon medical absorbent CKT-6A is used as a dyestuff in a quantity of 4-9 weight% to the weight of the mixture for forming grains, after salt has been previously mixed with the dye-stuff (Patent of Russian Federation No. 2002432, A23L, 1/328, publication 15.11.93). The usage of this pharmaceutical carbon adsorbent does not eliminate the mentioned defects as a large amount of adsorbent is necessary to obtain the required color. In this case the received substance can't be regularly used as foodstuff as longtime usage of pharmaceutical carbon adsorbent in such a large amount is not recommended.

In another known method of obtaining food granular caviar, an initial mixture is prepared that consists of a protein colloid solution, food jelly and water. The caviar grains are obtained by filling the initial mixture into a vessel with heated vegetable oil under pressure through gauged holes, separating the granules from the oil and washing with water. Then the granules are tanned by tea extract during 30 minutes and washed with water, then processed by the paint, washed with water once again, then with salt water. The product is processed by the taste additive at an amount of 10% of the product's mass and the caviar granules are mixed with vegetable oil. The ready product is filled in cans. A mixture of soya milk and mammalian foremilk is used as a protein colloid solution, in a proportion from 20:1 to 1:20. The proportion of protein colloid solution, food jelly and water in the first mixture is (7-10):1:(3-5). The extract of unripe nuts skin was used as paint and the obtained granules are processed in it, having filled them in the extract not more than for 3 minutes (License RF No. 2139668, CI 6 A23L 1/328, 27.05.1998; WO 2001/021010);. The defect of this method is that the product produces allergic reactions in the persons who suffer from non-digestion of dairy product as a result of lack of lactate dehydrogenase enzyme. Besides the food jelly that is derived from animal bones is hardly digested, which decreases dietary and food features of the derived product.

The object of the invention is to avail of a method for production of a granular black caviar substitute that will provide a product with better dietary and organoleptic features and high ecologic rates.

### Description of the Invention

The present invention discloses a method for preparing alimentary granular caviar according to which granular caviar is prepared from a mixture comprising a protein colloid solution, a food jelly and water, **characterized in that** the protein colloid solution essentially consists of soya milk and the food jelly essentially is of vegetable origin, preferably is pectin, in particular apple pectin.

A protein colloid solution essentially consisting of soya milk is meant to contain at least 90% soya milk, preferably at least 95% soya milk, more preferably at least 99% soya milk, most preferably 100% soya milk. A food jelly essentially being of vegetable origin is meant to contain at least 90% food jelly of vegetable origin, preferably at least 95%, more preferably at least 99% food jelly of vegetable origin, most preferably is fully of vegetable origin.

In the method according to the invention, the weight ratio of the protein colloid solution to the food jelly to the water preferably is (4-8):1:(2-3).

Then granules are prepared from the mixture as mentioned above by technology generally known in the art. For instance, a method as described in WO 2001/021010 may be used. The terms "granules" and "grains" are used synonymously throughout the description.

Briefly, the mixture is filled in a vessel with heated vegetable oil at 40-45°C through gauged holes, the resulting granules are separated from the oil and washed with water. The obtained granules are tanned by tea extract for 30 minutes and washed with water. Then the granules are processed by a dye, for instance prepared from the extract of unripe (green) nuts skin, and once again washed with water, then contacted with salt water, then the granules are seasoned with taste additive for at least 20 minutes. Finally, the caviar granules are mixed with vegetable oil. After each washing operation, the water content on the surface of the granules must be removed by processing the granules for 15-20 minutes with air with a moisture content not more than 10% of the product mass, leaving the granules on the sieve. The ready product is filled in cans.

Soya milk (TU No. 9222-002-10126558-94 "Soya milk") provides ready stocking adding amino acid with contents of sulphur (cysteine, methionine) and potassium ions excess, which promotes cells energetic metabolism and regulation of organism's cardiovascular and diuretic systems activity. Usage of soya milk decreases allergic reactions at the persons who suffer from non-digestion of dairy produce as a result of lack of lactate dehydrogenase ferment. Besides the examinations showed that regular usage of soya milk has considerable antineoplastic effect.

Soya milk is previously boiled and cooled to less than 15°C temperature.

A salt solution is prepared, having dissolved 17-22 % salt in boiled water. The solution is cooled till 15°C temperature.

The food jelly is jelly of vegetable origin that unlike the ones derives from the animals bones are easily digested by the organism. In this case, apple pectin is preferably used.

The dye is extract of unripe (green) nuts skin, preferably from walnut, that consists of biologically active and ecologically clear substances that have antisclerotic effect and promote excessive cholesterol removal from the organism.

Black tea leaves are added to the water in proportion not less than 1:5 for the tanning solution preparation, dipped for several hours, boiled for 2.5-3 hours, cooled, filtered, to obtain an extract that is conditioned at the terms of atmospheric pressure and bringing the contents of dry material to 50-55%. The obtained concentrate is used, having preliminarily solved in water: 10ml in 2-3 1 of water, depending on the preferable degree of the granules coloring. The obtained color is cooled till 15°C temperature.

The herring's head, rudder and bones are removed to prepare the taste additive. The cleaned fish is chopped and homogenized by a mixer. Water, salt and vegetable oil (corn oil is desirable) are added to the obtained homogenous mass (fish homogenate) in the following proportion:

| | |
|---|---|
| Water | 10.0-15.0 |
| Salt | 15.0-20.0 |
| Vegetable oil | 10.0-15.0 |
| Fish homogenate | up to 100% |

Besides the emulsion of fish components is a mixture of fish oil and fish homogenate liquid share in proportion of 1:1.

The mixture is made homogenous by a mixer, centrifuged for 15-20 minutes and the upper liquid layers collected: the fish oil, liquid fraction of fish homogenate, water and salt dissolved in liquid components. The obtained mixture is added to vegetable oil (corn oil is desirable) in the amount of 10.0-15.0% and again centrifuged for 15-20 minutes. The sediment is removed; the obtained emulsion is used as a taste additive.

The samples of the initial mixture components and characteristics of the obtained granules are presented in table 1.

According to the method as described herein, the order of actions for the caviar preparation is as follows. An initial mixture is prepared, according to the data presented in Table 1. For that purpose the pectin is wetted in soya milk, then continuously mixed till boiling and cooled till 50°C. The initial mixture is filled in the thermoresistant device where 0,2-1,0 kG/cm² pressure is kept. Corn oil is filled in granular reception device the temperature of which is kept not more than 15°C. The upper layer of vegetable oil of 5-7 cm in funnel is heated till 40-45°C by heating electric elements and this temperature is kept. After opening of the thermostate's valve the initial mixture passes under pressure through gauged holed of 0.4-0.6 mm, then in the form of stream pass through 60-90 mm air gap and drop by stream in the hot layer of vegetable oil in the reception funnel of granular device, having formed a cord consisting of spherical granules with 2-3.5 mm diameter. Then through the controlling device another machinery is connected that promotes the flow of the granular cord in a circle and in granulator - in a spiral (for better formation and cooling of the granules). The sizes of granules are controlled, having changed the speed of the initial mixture streams outflow or the temperature of the vegetable oil's upper layer.

A special device is used for preparing granular black caviar granules, through which spherical granules are obtained from the initial mixture with 1-3 mm diameter that are then cooled by the same device. Moreover, the oil is heated till 40-45°C that is enough for the formation of granules at the desirable size. The granules obtained in such temperature conditions are not sticking and keep their spherical form.

The further operations for the caviar production: tanning, painting and seasoning may be carried out in a common vessel. After filling with the granules in the granular reception device, the granules are emptying on the sieve from which the remains of vegetable oil flows down. The granules are washed by the stream of cold water to remove the oil cover from the surface and keep on the sieve for 20-30 minutes to remove the water from them. The derived granules are tanned in the tea leaves water extract not less than for 30 minutes and wash by water. Then the granules are processed by paint that is an extract of unripe nuts skins, once again wash by water, then salt water. The taste additives are injected in the product but not more than 10% of the product's mass and mix the caviar granules with oil. After each operation of washing the water content on the surface of granules must be dried within 15-20 minutes, having left them on the sieve. The ready products are filled in cans.

### Example 1

IN one of the samples soya milk (6,66 kg), apple pectin (0,95kg) and water (2,4 kg) is taken to obtain 10 kg of granules (the proportion is 7:1:2,5). The obtained granules are kept in 10 L tea leaves extract and tanned at 15°C during 30-40 minutes. Then the extract is poured out, the granules are washed by cold water in 5-10 minutes. The washed granules are kept on the sieve to remove water from the surface and painted by having replaced in 10 L of water solution of unripe nut skins concentrate, then the paint is poured out. Granules of dark grey till black color with grey shine are obtained. The colored granules are cleaned of the remaining paint, being washed in raw, then in boiled and cooled water. The washed granules are kept on the sieve to remove water from their surface, and then kept in salt water for 15-20 minutes. The salt water is poured out and the granules remain to remove the salt water. Then he granules are mixed with taste additive and kept not less than 30 minutes. The mixture is replaced on the sieve and kept for 5-10 minutes to remove the remains of the taste additive.

Then the ready caviar is optionally chopped, filled in cans and packed. The product is oiled by the corn oil at the upper layer to keep from drying, is stripped and kept at the conditions of more than 7°C for 5-7 days.

### Example 2

In another variant of fulfillment the proportion of soya milk, apple pectin and water is 5:1:2,5. The granules with the best characteristics are obtained at the proportion 6:1:2,5.

The characteristics of the ready products are presented in Table 2. The food granular caviar has treating-protective and dietary features, conditioned by the availability of such components as soya milk, apple pectin and extract of unripe nut skins. No chemical reagents were used in the offered method.

The invention may be used in food industry enterprises.

**Table 1. Samples of the initial mixture components for the imitation caviar**

| | Initial mixture components | Contents, mass % |
|---|---|---|
| 1 | Soya milk | 61,3 |
| | Apple pectin | 7,4 |
| | Water | 31,3 |
| 2 | Soya milk | 62,5 |
| | Apple pectin | 10,4 |
| | Water | 27,3 |
| 3 | Soya milk | 60,0 |
| | Apple pectin | 12,0 |
| | Water | 28,0 |

**Table 2 Physical specifications and degustation of imitation granular black caviar substitute**

| | Names of rates | Specifications |
|---|---|---|
| 1 | Appearance | spheric granules with smooth |
| | | surface |
| 2 | Sizes (diameter, mm) | 2-3,5 mm |
| 3 | Formation | solid, not sticking to each other |
| 4 | Color | from light to dark grey and black |
| 5 | Taste and aroma | with characteristic fish taste |
| | | and smell without offtaste and - |
| | | smell |
| 6 | Deformation limit | at keeping in 30°C till 5 hours |
| 7 | Heat stability | the granules are heat resistant |
| | | from +25°C to -30°C |

## Claims

1. A method for the preparation of a granular black caviar substitute comprising granulating a mixture comprising a protein colloid solution, a food jelly and water, and processing the obtained granules to improve color and flavour, **characterized in that** the protein colloid solution essentially consists of soya milk and the food jelly essentially is of vegetable origin.

2. The method according to claim 1, wherein the protein colloid solution contains at least 90% (w/w) soya milk and/or the food jelly contains at least 90% (w/w) food jelly of vegetable origin.

3. The method according to claim 1 or 2, wherein the weight ratio of the protein colloid solution to the food jelly to the water is (4-8):1:(2-3).

4. The method according to any one of the preceding claims, wherein the food jelly is pectin, preferably apple pectin.
